# FASCICULE DE BREVET EUROPEEN

(11) **EP 2 995 783 B1**
(45) Date de publication et mention de la délivrance du brevet: **25.04.2018**
(21) Numéro de dépôt: 15183308.4
(22) Date de dépôt: 01.09.2015
(51) Int. Cl.: F01D 25/24, B29C 70/86, B29C 70/46

(54) **CARTER COMPOSITE DE COMPRESSEUR BASSE PRESSION DE TURBOMACHINE AXIALE**
VERBUNDWERKSTOFFGEHÄUSE EINES NIEDRIGDRUCK-KOMPRESSORS EINES AXIALEN TURBOTRIEBWERKS
COMPOSITE CASING FOR AXIAL TURBOMACHINE LOW-PRESSURE COMPRESSOR

(30) Priorité: 12.09.2014 BE 201400686
(43) Date de publication de la demande: 16.03.2016
(73) Titulaire: Safran Aero Boosters SA, 4041 Herstal (BE)
(72) Inventeur: HANNECART, M. Benoît, 4650 Herve (BE); DURIE, Angela, 8301 Knokke-Heist (BE)
(74) Mandataire: Lecomte & Partners

(56) Documents cités:
- EP-A1- 1 938 953
- EP-A1- 2 077 183
- EP-A1- 2 610 165
- EP-A1- 2 883 688
- WO-A2-2013/016482
- JP-A- S6 143 541
- US-A- 5 919 543

## Description

### Domaine technique

L'invention a trait à un carter composite de turbomachine. Plus précisément, l'invention a trait à un carter annulaire composite de turbomachine axiale présentant une paroi circulaire, une bride annulaire radiale, une arête vive à leur jonction ; le composite comprenant un renfort fibreux. L'invention a également trait à un procédé de fabrication d'un carter composite de turbomachine. L'invention a également trait à une turbomachine axiale comprenant un carter annulaire composite.

### Technique antérieure

Dans le but d'alléger une turbomachine, certains de ses éléments conventionnellement produits en métal peuvent l'être en un matériau composite. Des éléments structurants tels des supports, des carters peuvent être réalisés en un matériau composite. En particulier, un carter externe de compresseur, notamment basse pression, peut être produit en un matériau composite.

Un tel carter présente généralement une paroi cylindrique qui supporte des rangées annulaires d'aubes, et des brides annulaires de fixation qui s'étendent radialement. Les brides permettent le montage du carter de compresseur sur un carter intermédiaire de soufflante, et la fixation d'un bec annulaire de séparation. La surface interne du carter permet de guider le flux annulaire le long du compresseur, et doit à cet effet présenter une surface lisse ; sans ressauts. Cette contrainte impose de réaliser des arêtes vives au niveau des brides de fixations.

Un carter externe composite de compresseur peut être réalisé à partir d'une préforme densifiée par une matrice. La préforme peut être formée d'un empilement de feuilles fibreuses empilées les unes sur les autres, les feuilles s'étendant à la fois sur la portion cylindrique et sur les brides de fixation. Une fois mise en forme, la préforme est disposée dans un moule d'injection présentant des arêtes pour reproduire la forme voulue du carter. Or, la préforme empilée forme un arrondi au niveau de l'arête du moule et laisse subsister un espace inoccupé à cet endroit, ou du moins pauvre en fibres. Lors de l'injection, l'espace est rempli par la résine sans être renforcé par des fibres. Par conséquent, le carter composite présente une faiblesse à cet endroit.

Il est connu du document EP 1 900 502 A1 un carter annulaire composite de turbomachine. Le carter présente un corps tubulaire et des brides annulaires aux extrémités du corps. Les brides forment des arêtes annulaires vives à l'intérieur du corps. Le carter composite comprend plusieurs renforts fibreux dont l'un est effiloché au niveau des arêtes de sorte à y répartir les fibres dans les jonctions entre les brides et le corps annulaire. Cet effilochage s'effectue à l'aide d'une étape de montée en température et permet de répartir efficacement des fibres dans les arêtes. Cependant, l'étape d'effilochage immobilise le moule pendant une durée qui réduit la cadence de production du carter. Cet enseignement impose en outre l'emploi de plis aptes à s'effilocher.

Le document EP 2 077 183 A1 divulgue une turbomachine comprenant un carter composite avec une bride. La bride incorpore une matrice polymère renforcée par une structure fibreuse. La bride comprend une partie structurale renforcée par une structure fibreuse principale et une première partie d'usinage renforcée par une première structure fibreuse distincte de la structure fibreuse principale. Les matrices de la partie structurale et de la première partie d'usinage sont identiques, la première partie d'usinage étant située sur une partie de la face principale de la partie structurale et usinée selon une première surface d'usinage, l'intersection entre la première surface d'usinage et les fibres de la structure fibreuse principale étant nulle.

### Résumé de l'invention

### Problème technique

L'invention a pour objectif de résoudre au moins un des problèmes posés par l'art antérieur. L'invention a également pour objectif de simplifier la réalisation d'un carter composite avec une arête saillante entre une paroi et une bride de fixation. L'invention a également pour objectif de renforcer au plus près une arête vive sous une bride de carter composite de turbomachine. L'invention a également pour objectif de réduire les coûts d'un carter composite.

### Solution technique

L'invention a pour objet un procédé de fabrication d'un carter composite de turbomachine, le carter comprenant une paroi généralement circulaire ou en arc de cercle, une bride de fixation s'étendant radialement depuis un bord de la paroi et formant avec la paroi une arête vive, caractérisé en ce que le procédé comprend les étapes suivantes, éventuellement dans cet ordre : (a) fourniture ou mise à disposition d'un moule avec un coin configuré pour former l'arête du carter ; (b) fourniture et mise en place d'un profilé en résine thermoplastique chargée le long du coin du moule ; (c) mise en place d'un renfort fibreux dans le moule en épousant le profilé, le renfort fibreux étant éventuellement imprégné d'une résine ; (d) fermeture du moule; (e) polymérisation d'une résine injectée dans le moule ou d'une résine imprégnant le renfort fibreux; (f) démoulage du carter.

Selon un mode avantageux de l'invention, lors de l'étape (d) fermeture du moule, le renfort fibreux est comprimé contre le profilé, éventuellement le profilé comprend une surface incurvée et le renfort est une préforme fibreuse conformée pour épouser la surface incurvée du profilé.

Selon un mode avantageux de l'invention, lors de l'étape (e) polymérisation, la résine injectée ou imprégnée adhère au profilé, préférentiellement la résine injectée vient au contact du profilé.

Selon un mode avantageux de l'invention, la résine du profilé comprend une résine époxydique et/ou des polyamines.

Selon un mode avantageux de l'invention, le profilé comprend entre 0.5% et 5 % massique de fibres, notamment des fibres de carbone.

Selon un mode avantageux de l'invention, la résine du profilé comprend entre 40% et 90% massique de N,N,N',N'-tétraglycidyl-4,4'-diaminodiphénylméthane.

Selon un mode avantageux de l'invention, la résine du profilé comprend entre 10% et 30% massique de polyéther sulfone.

Selon un mode avantageux de l'invention, la résine du profilé comprend entre 1% et 10% massique de 1,5-Naphthalenediol, éventuellement la résine du profilé est une résine thixotropique.

Selon un mode avantageux de l'invention, le profilé présente un profil généralement triangulaire et une masse linéaire comprise entre 5 et 20 kg/m, préférentiellement entre 10 et 15 kg/m.

Selon un mode avantageux de l'invention, la longueur du profilé est égale au linéaire de l'arête associée.

Selon un mode avantageux de l'invention, la résine est une résine thixotropique.

Selon un mode avantageux de l'invention, le profilé comprend entre 0,5% et 10% massique de poudre d'aluminium.

Selon un mode avantageux de l'invention, le profilé comprend majoritairement de la résine.

L'invention a également pour objet un carter composite de turbomachine axiale, notamment de compresseur, le carter comportant : une paroi généralement circulaire ou en arc de cercle ; une bride de fixation s'étendant radialement depuis un bord de la paroi, et formant avec ladite paroi une arête vive ; un renfort fibreux renforçant la paroi et la bride ; une matrice avec une zone d'arête entre l'arête et le renfort fibreux ; remarquable en ce que la zone d'arête comprend des fibres dont la longueur moyenne est inférieure à 10 mm.

Selon un mode avantageux de l'invention, la longueur moyenne des fibres de la zone d'arête est inférieure à 4 mm, préférentiellement inférieure à 2,00 mm.

Selon un mode avantageux de l'invention, dans la zone d'arête, la matrice comprend de la poudre d'aluminium, qui représente éventuellement entre 0,1 % et 10% de la masse de la zone d'arête.

Selon un mode avantageux de l'invention, le renfort fibreux comprend un profil de révolution avec un arrondi qui délimite la zone d'arête ; éventuellement le renfort fibreux comprend un empilement de plis fibreux ou le renfort fibreux est une préforme fibreuse tissée tridimensionnellement.

Selon un mode avantageux de l'invention, la bride de fixation est une bride circulaire ou semi-circulaire, ou une bride axiale de fixation.

Selon un mode avantageux de l'invention, la matrice occupe le renfort fibreux.

Selon un mode avantageux de l'invention, la longueur moyenne des fibres du renfort fibreux est supérieure à 30 cm, préférentiellement supérieure à 1 m.

Selon un mode avantageux de l'invention, les fibres du renfort sont agencées en strates.

Selon un mode avantageux de l'invention, dans la zone d'arête les fibres sont généralement orientées de manière aléatoire tout le long de l'arête.

L'invention a également pour objet une turbomachine comprenant un carter composite, remarquable en ce que le carter composite est réalisé suivant un procédé de réalisation de carter composite selon l'invention, et/ou le carter composite est conforme à l'invention.

### Avantages apportés

L'invention permet de réaliser un carter à l'aide d'un profilé de composition différente de la paroi. Le profilé permet de créer une arête vive dont la composition optimise la résistance mécanique sans allonger la réalisation du carter, ni ajouter d'autres étapes de fabrication. Le choix de la charge de la résine autorise la formation d'un composite mixte avec différents types de fibres, de tailles et de proportion variable. La mise en oeuvre du profilé est simple, son caractère thixotropique favorise son placement dans le coin du moule.

La réalisation d'une arête grâce à un profilé en résine destinée à être polymérisée permet de former une matrice avec une composition dédiée aux contraintes spécifiques des arêtes. Ceci améliore la résistance mécanique et l'endurance du carter 28 qui peut être soumis à des vibrations, à des attaques chimiques à une température supérieure à 170°C pendant le fonctionnement de la turbomachine.

### Brève description des dessins

La figure 1 représente une turbomachine axiale selon l'invention.
La figure 2 est un schéma d'un compresseur de turbomachine selon l'invention.
La figure 3 est un diagramme représentant le procédé de fabrication d'un carter selon l'invention.
La figure 4 schématise un renfort fibreux du carter selon l'invention.
La figure 5 illustre une coupe du renfort fibreux du carter suivant l'axe 5-5 tracé sur la figure 4 selon l'invention.
La figure 6 représente l'étape du procédé de mise en place du profilé dans le moule selon l'invention.
La figure 7 représente l'étape du procédé de mise en place du renfort fibreux dans le moule selon l'invention.
La figure 8 représente l'étape du procédé de fermeture du moule selon l'invention.
La figure 9 représente l'étape du procédé d'injection et polymérisation d'une résine dans le moule selon l'invention.
La figure 10 représente l'étape du procédé de démoulage du carter selon l'invention.

### Description des modes de réalisation

Dans la description qui va suivre, les termes interne et externe renvoient à un positionnement par rapport à l'axe de rotation d'une turbomachine axiale.

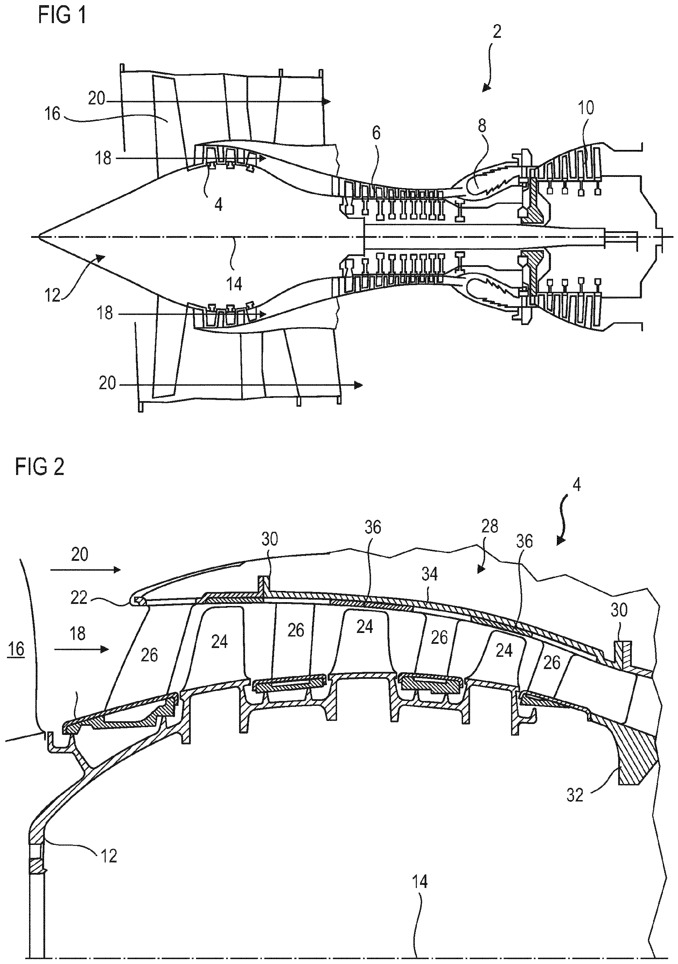

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Les compresseurs comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné soufflante 16 ou fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux primaire 18 et le flux secondaire 20 sont des flux annulaires, ils sont canalisés par les carters de la turbomachine.

La figure 2 est une vue en coupe d'un compresseur d'une turbomachine axiale 2 telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur comprend plusieurs redresseurs, en l'occurrence quatre, qui contiennent chacun une rangée d'aubes statoriques 26. Les redresseurs sont chacun associés à une rangée d'aubes rotoriques pour redresser le flux d'air, de sorte à convertir la vitesse du flux en pression.

Le compresseur comprend au moins un carter 28. Le carter 28 peut présenter une forme généralement annulaire avec un profil de révolution autour de l'axe de rotation 14 du rotor 12. Il peut être un carter externe et peut être réalisé en matériaux composites, par exemple avec une matrice organique et un renfort fibreux. Il peut être essentiellement plat. Le carter composite 28 peut comprendre des brides de fixation 30, par exemple des brides annulaires de fixation pour la fixation du bec de séparation 22 et/ou pour se fixer à un carter intermédiaire 32 de soufflante de la turbomachine. Les brides annulaires 30 peuvent comprendre des orifices de fixation (non représentés) pour permettre une fixation par boulons, ou par lockbolts.

La carter composite 28 peut comprendre une paroi généralement 34 circulaire ou en arc de cercle, dont les bords peuvent être délimités par les brides 30. La paroi 34 peut présenter une forme d'ogive, avec une variation de rayon le long de l'axe 14. Cette évolution du rayon peut s'inverser. La paroi 34 présente une surface intérieure avec une double courbure.

La paroi 34 peut présenter des surfaces annulaires de fixations d'aubes et/ou des séries d'orifices de fixation (non représentés) disposées en rangées annulaires pour la fixation des aubes statoriques 26. Les orifices de fixation peuvent être munis d'inserts (non représentés) pour renforcer le matériau composite du carter annulaire 28. Les inserts peuvent être intégrés dans l'épaisseur de la paroi 34 et/ou des brides 30.

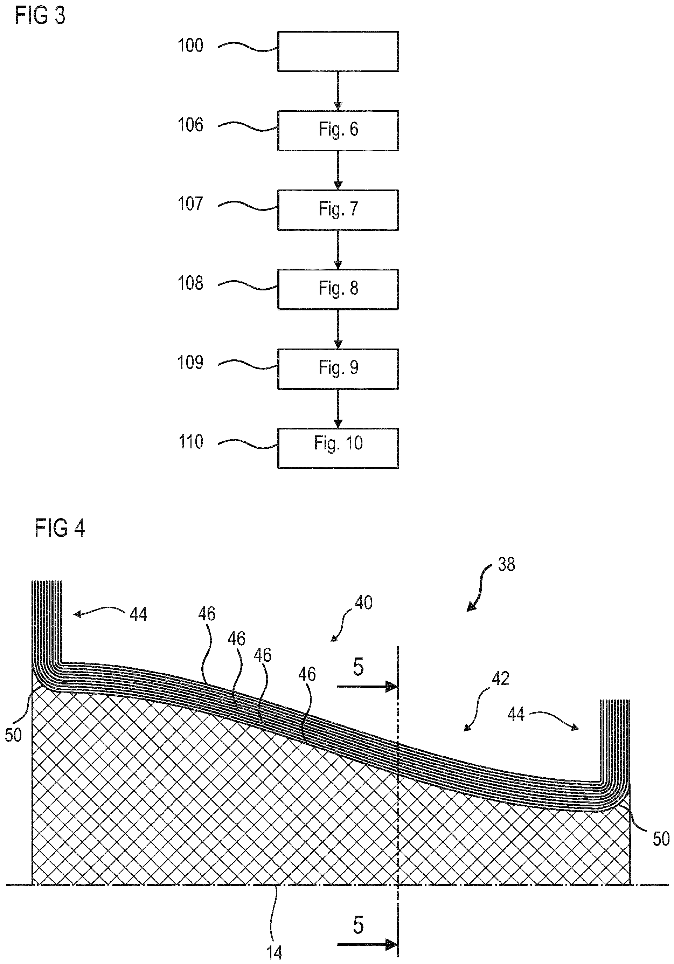

La figure 3 représente un diagramme du procédé de fabrication du carter annulaire composite.

Le procédé peut comprendre la succession, éventuellement dans cet ordre, des étapes suivantes :
(a) fourniture ou mise à disposition 100 d'un moule avec une surface de moulage présentant un coin configuré pour former l'arête du carter ;
(b) fourniture et mise en place 106 d'un profilé en résine thermoplastique le long du coin du moule ;
(c) mise en place 107 d'un renfort fibreux dans le moule en épousant le profilé ;
(d) fermeture 108 du moule;
(e) polymérisation 109 d'une résine, éventuellement injectée dans le moule ;
(f) démoulage 110 du carter.

Lors de l'étape (b) fourniture 106 d'un profilé, sa résine peut être chargée. Elle peut comprendre des fibres ou des particules améliorant sa résistance mécanique et/ou lui conférant une caractéristique thixotropique.

Suivant une alternative de l'invention, au début l'étape (c) fourniture et mise en place d'un renfort fibreux, le renfort fibreux peut être préalablement imprégné d'une résine. Il peut être formé de plis fibreux imprégnés. Lors de l'étape (e) polymérisation, la résine qui imprègne les plis est polymérisée en chauffant le moule.

Lors de l'étape (c) mise en place 106 d'un renfort fibreux, le renfort peut être réalisé préalablement à sa mise en place dans le moule. Il peut être conformé sur un gabarit, ou tissé. Suivant une alternative de l'invention, le renfort peut être conformé sur le moule, par exemple en empilant successivement plusieurs plis fibreux sur une surface de moulage du moule.

La figure 4 représente une coupe du renfort fibreux 38 du carter, la coupe étant le long de l'axe de rotation 14. Le présent enseignement pouvant être appliqué à tout carter de la turbomachine.

Le renfort fibreux 38 peut présenter une symétrie de révolution avec un profil de révolution par rapport à l'axe 14. Le profil peut être plat. Le renfort fibreux 38 peut comprendre une préforme fibreuse 40, qui a été formée de sorte à ébaucher la forme du carter annulaire composite. Le renfort fibreux 38 renforce et occupe, éventuellement totalement, la paroi et chaque bride du carter.

La préforme 40 peut comprendre un empilement ou un enroulement de différentes feuilles fibreuses 46 ou plis fibreux 46, qui peuvent s'étendre sur la cloison 42, et sur au moins une ou plusieurs brides de fixation 44. La préforme 40 peut comprendre une couche avec un matelas fibreux, éventuellement tissé de manière tridimensionnelle.

Les plis 46 peuvent comprendre des fibres de carbone, et/ou des fibres de graphite, et/ou des fibres de verre. Par exemple, la préforme peut comprendre une couche centrale avec des plis en fibres de carbone, et au moins un pli avec des fibres de verre en surface, éventuellement pour éviter une corrosion galvanique. Les fibres du renfort fibreux peuvent présenter une longueur moyenne supérieure à 30cm, préférentiellement supérieure à 60cm, plus préférentiellement supérieure à 100cm. Les plis 46 peuvent être des plis non tissés ou des plis tissés. A l'intérieur, sous chaque bride annulaire 44, le renfort, éventuellement via sa préforme, forme un arrondi annulaire 50 ou coude qui résulte de l'enroulement ou le dépôt successif de plis sur un gabarit de préformage.

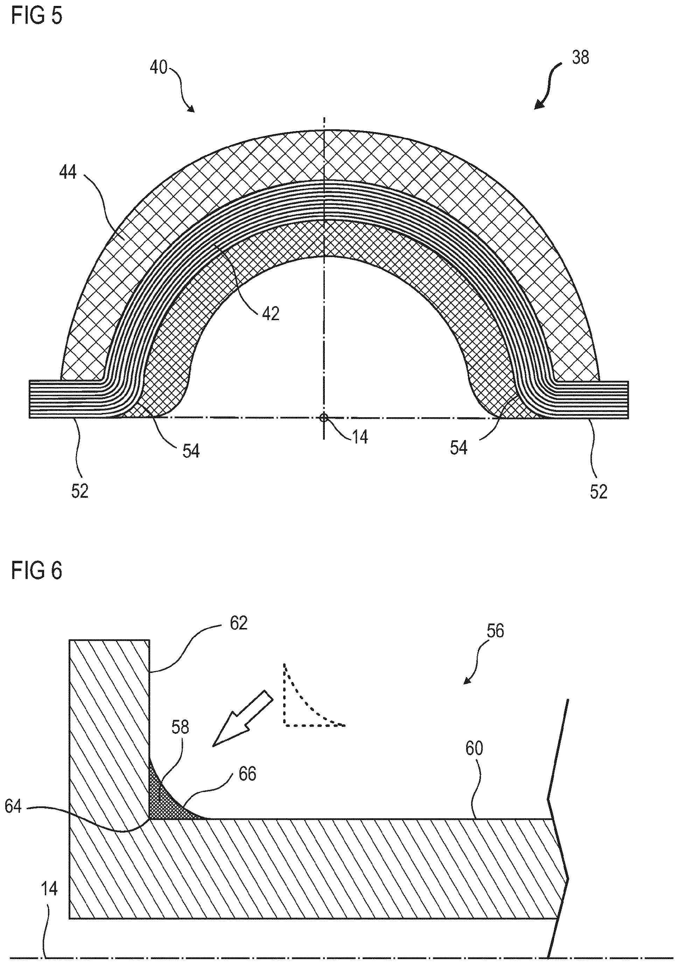

La figure 5 représente une coupe du renfort fibreux 38 du carter composite suivant l'axe 5-5 tracé sur la figure 4.

Le carter composite peut décrire un cercle ou être un demi-carter annulaire qui décrit un demi-cercle, ou un segment annulaire de carter annulaire qui décrit une fraction de cercle, tel un quart, un sixième, ou un huitième de cercle. Le carter annulaire peut être divisé selon un ou plusieurs plans qui s'étendent suivant l'axe de rotation 14. Pour joindre les demi-carters ou les segments de carters, ceux-ci sont munis de brides axiales de fixation destinées à être fixées les unes aux autres.

Par conséquent le renfort fibreux 38 du carter annulaire peut également décrire un demi-cercle et présenter des brides axiales 52, qui s'étendent radialement. Le renfort fibreux 38 pouvant être réalisé par un empilement successif de plis fibreux 46, des arrondis axiaux 54 ou coudes, peuvent se former au bord de la paroi, à la jonction axiale avec les brides axiales, tout le long axialement des brides axiales 52.

La figure 6 représente l'étape de fourniture ou mise à disposition d'un moule 56 ainsi que l'étape de fourniture et mise en place d'un profilé 58. Une portion de moule 56 et le profilé 58 sont représentés en coupe selon un plan passant par un axe qui correspond à l'axe 14.

Le moule peut présenter des surfaces de moulage (60 ; 62) générées par des profils de révolution. Le moule peut présenter une surface de moulage annulaire généralement tubulaire 60 qui est la contre-forme de la surface intérieure du carter annulaire. Bien que le profil de la surface de moulage tubulaire 60 ici représenté soit droit, il est évident que dans la pratique il peut devenir courbe. Le moule 56 peut également présenter une surface de moulage s'étendant radialement 62, qui est la contre-forme d'une surface de fixation d'une bride. La surface tubulaire 60 et la surface radiale 62 forment un coin 64 ou angle rentrant à leur jonction, permettant de former l'arête du carter.

Un profilé 58 en résine est fourni et mis en place dans le moule 56, de sorte à combler le coin 64. Sa longueur correspond à celle de l'arête qui doit être réalisée. Le profilé 58 peut être fourni dans un emballage pour le protéger de l'air ambiant. La résine du profilé peut être une résine thermoplastique ; telle une résine époxy. La résine peut comprendre une charge, telle de la poudre d'aluminium et/ou des fibres, éventuellement de carbone. Les fibres peuvent avoir une longueur inférieure à 10mm, préférentiellement inférieure à 2mm. Leur masse représente entre 0,1% et 20%, préférentiellement entre 0,5% et 5% de la masse du profilé.

La résine du profilé 58 peut comprendre, en masse, entre 40% et 90% de N,N,N',N'-tétraglycidyl-4,4'-diaminodiphénylméthane, et/ou entre 10% et 30% de polyéther sulfone, et/ou entre 1% et 10% de 1,5-Naphthalenediol. Eventuellement la résine est une résine thixotropique, c'est-à-dire dont la viscosité diminue sous l'action d'une contrainte mécanique.

Le profilé 58 peut présenter une section, ou un profil selon son allongement principal qui est généralement triangulaire. Un angle, éventuellement droit, du profil du profilé coïncide avec le coin du moule 56 de sorte à le remplir tel un joint de bourrage. Le profilé 58 peut en outre montrer une surface incurvée 66 pour coopérer avec le profil coudé du renfort fibreux.

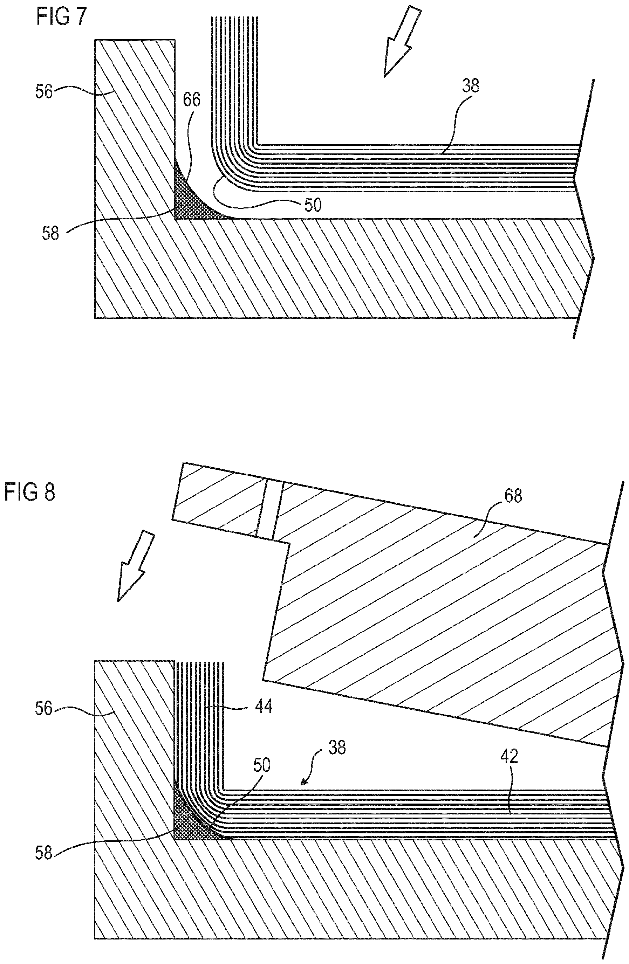

La figure 7 représente l'étape de mise en place d'un renfort fibreux dans le moule. Cette figure correspond à la réalisation d'une arête circulaire associée à une bride annulaire. Le présent enseignement peut trivialement être transposé à une arête axiale.

Cette étape permet de placer le renfort fibreux 38 contre la surface de moulage du moule 56, et de recouvrir le profilé 58. Le renfort 38 épouse toute la hauteur radiale du profilé 58, éventuellement sur toute la surface incurvée 66. Le renfort 38 et/ou le profilé 58 peuvent être sensiblement déformés lors de cette étape puisque le renfort fibreux 38 est compressible. Le profilé 58 peut se déformer en raison de son élasticité et/ou de sa thixotropie. Le profilé 58 permet de combler le volume entre l'arête et la portion coudée du renfort fibreux 38.

La figure 8 représente l'étape de fermeture du moule 56 de sorte à enfermer le profilé 58 et le renfort 38.

Le moule est une portion de moule 56, et comprend au moins une deuxième portion de moule 68 ou contre-moule 68 qui est appliqué contre le renfort fibreux 38 et le compacte. Le contre-moule 68 peut réduire l'épaisseur de la cloison 42 et/ou l'épaisseur de la bride 44 du renfort fibreux 38. L'effet de la fermeture du moule peut permettre de réduire l'épaisseur de la cloison 42 du renfort d'au moins 5%, préférentiellement au moins 20%. Le profilé 58 peut également se déformer pour les raisons expliquées précédemment.

Le renfort 38 et le profilé 58 peuvent s'épouser sur la majorité, préférentiellement sur au moins 80%, plus préférentiellement sur la totalité de l'épaisseur de la bride 44 et/ou sur la majorité, préférentiellement sur au moins 80%, plus préférentiellement sur la totalité de l'épaisseur de la cloison 42 du renfort 38. Lorsqu'ils s'épousent, ils se compressent mutuellement, le grand côté du triangle s'incurve, et l'arrondi 50 à la jonction entre la bride 44 et la cloison 42 du renfort s'écrase, s'aplatit.

La présence de contre moule est optionnelle car le carter composite peut être moulé en fermant le moule avec une membrane.

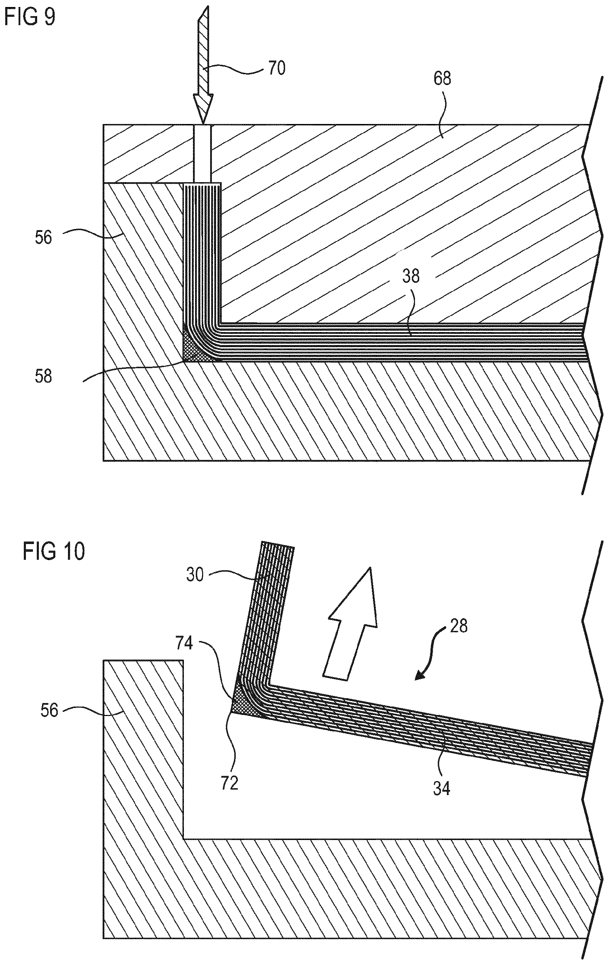

La figure 9 représente l'étape de polymérisation de la résine.

Cette étape peut comprendre l'injection d'une résine 70, notamment une résine organique, dans le moule d'injection (56 ; 68). La résine injectée 70 peut être une résine thermoplastique telle de l'époxy, du polyétherimide (PEI), du polyétheréthercétone (PEEK). L'injection peut consister à imprégner le renfort, selon un procédé du type RTM (acronyme anglais pour Resin Transfer Molding). La résine injectée 70 se répartit dans le renfort 38 et vient au contact du profilé 58.

La résine injectée 70 et/ou la résine du profilé est/sont configurée/s de sorte à permettre une adhésion entre le profilé 58 et le renfort 38. Les résines peuvent être de même nature ou de même type. Elles peuvent être toutes les deux des résines époxydes.

Suite à ces étapes, la résine injectée 70 adhère au profilé 58, leurs résines durcissent et adhèrent l'une à l'autre de sorte à former un corps solide. Une continuité de matière ; de résine ; apparaît.

La figure 10 représente l'étape de démoulage du carter composite 28. Dans un premier temps, le contre moule est ôté du moule, puis un effort de démoulage est appliqué sur le carter pour l'extraire du moule.

Le carter 28 issu de moulage peut être usiné. Il peut être perforé au niveau des brides 30 pour réaliser des orifices de fixation, et/ou au niveau de la paroi 34 pour permettre le montage d'aubes. Eventuellement, les brides axiales et/ou annulaires peuvent être découpées pour enlever les extrémités hétérogènes, spécialement prévues pour améliorer la qualité des brides finies.

Le carter 28 présente une arête vive 72 formant un angle saillant. Cette arête 72 peut être intégrée dans la turbomachine, sans nécessiter d'usinage complémentaire. L'arête 72 peut généralement former un angle droit, ce qui permet de réaliser une jonction lisse lorsqu'elle est mise en concordance avec une arête correspondante. La réunion de deux arêtes 72 permet de réaliser une surface de guidage d'un flux sans ressaut qui nuirait au bon écoulement du flux. Cette réunion peut également former une zone de fixation lisse, par exemple pour venir y appuyer une plateforme d'aube en vue de son positionnement et de sa fixation. Le rayon moyen de la paroi 34 peut être supérieur à 1%, préférentiellement supérieur à 2%, plus préférentiellement supérieur à 4%, éventuellement supérieur à 6% du rayon de l'arête 72.

Le carter composite 28 est mixte, il présente une paroi et une bride renforcée avec les fibres longues de la préforme. Il présente en outre une zone d'arête 74 présentant également une matrice et une charge. Cette charge peut présenter la poudre d'aluminium, et/ou les fibres prévues dans le profilé. La matière de la zone d'arête 74 correspond à celle du profilé.

## Revendications

1. Procédé de fabrication d'un carter composite (28) de turbomachine (2), le carter comprenant une paroi (34) généralement circulaire ou en arc de cercle, une bride de fixation (30) s'étendant radialement depuis un bord de la paroi et formant avec la paroi une arête (72) vive, **caractérisé en ce que** le procédé comprend les étapes suivantes, éventuellement dans cet ordre :
(a) fourniture ou mise à disposition (100) d'un moule (56) avec un coin (64) configuré pour former l'arête (72) du carter (28) ;
(b) fourniture et mise en place (106) d'un profilé (58) en résine thermoplastique chargée le long du coin du moule ;
(c) mise en place (107) d'un renfort fibreux (38) dans le moule (56) en épousant le profilé (58), le renfort fibreux étant éventuellement imprégné d'une résine ;
(d) fermeture (108) du moule ;
(e) polymérisation (109) d'une résine injectée (70) dans le moule ou d'une résine imprégnant le renfort fibreux ;
(f) démoulage du carter (110).

2. Procédé selon la revendication 1, **caractérisé en ce que** lors de l'étape (d) fermeture du moule (56), le renfort fibreux (38) est comprimé contre le profilé (58), éventuellement le profilé comprend une surface incurvée (66) et le renfort est une préforme fibreuse conformée pour épouser la surface incurvée (66) du profilé.

3. Procédé selon l'une des revendications 1 à 2, **caractérisé en ce que** lors de l'étape (e) polymérisation, la résine injectée (70) ou imprégnée adhère au profilé (58), préférentiellement la résine injectée (70) vient au contact du profilé (58).

4. Procédé selon l'une des revendications 1 à 3, **caractérisé en ce que** la résine du profilé (58) comprend une résine époxydique et/ou des polyamines.

5. Procédé selon l'une des revendications 1 à 4, **caractérisé en ce que** le profilé (58) comprend entre 0.5% et 5 % massique de fibres, notamment des fibres de carbone.

6. Procédé selon l'une des revendications 1 à 5, **caractérisé en ce que** la résine du profilé (58) comprend entre 40% et 90% massique de N,N,N',N'-tétraglycidyl-4,4'-diaminodiphénylméthane.

7. Procédé selon l'une des revendications 1 à 6, **caractérisé en ce que** la résine du profilé (58) comprend entre 10% et 30% massique de polyéther sulfone.

8. Procédé selon l'une des revendications 1 à 7, **caractérisé en ce que** la résine du profilé (58) comprend entre 1% et 10% massique de 1,5-Naphthalenediol, éventuellement la résine du profilé (58) est une résine thixotropique.

9. Procédé selon l'une des revendications 1 à 8, **caractérisé en ce que** le profilé (58) présente un profil généralement triangulaire et une masse linéaire comprise entre 5 et 20 kg/m, préférentiellement entre 10 et 15 kg/m.

10. Carter composite (28) de turbomachine axiale (2), notamment de compresseur (4 ; 6), le carter comportant :
- une paroi (34) généralement circulaire ou en arc de cercle ;
- une bride de fixation (30) s'étendant radialement depuis un bord de la paroi (34), et formant avec ladite paroi une arête (72) vive ;
- un renfort fibreux (28) renforçant la paroi et la bride ;
- une matrice avec une zone d'arête (74) entre l'arête (72) et le renfort fibreux (28) ;
**caractérisé en ce que**
la zone d'arête (74) comprend des fibres dont la longueur moyenne est inférieure à 10 mm.

11. Carter (28) selon la revendication 10, **caractérisé en ce que** la longueur moyenne des fibres de la zone d'arête (74) est inférieure à 4 mm, préférentiellement inférieure à 2,00 mm.

12. Carter (28) selon l'une des revendications 10 à 11, **caractérisé en ce que** dans la zone d'arête (74), la matrice comprend de la poudre d'aluminium, qui représente éventuellement entre 0,1 % et 10% de la masse de la zone d'arête (74).

13. Carter (28) selon l'une des revendications 10 à 12, **caractérisé en ce que** le renfort fibreux (38) comprend un profil de révolution avec un arrondi (50 ; 54) qui délimite la zone d'arête (74) ; éventuellement le renfort fibreux comprend un empilement de plis fibreux (46) ou le renfort fibreux est une préforme fibreuse tissée tridimensionnellement.

14. Carter (28) selon l'une des revendications 10 à 13, **caractérisé en ce que** la bride de fixation (30) est une bride circulaire ou semi-circulaire, ou une bride axiale de fixation.

15. Turbomachine axiale (2) comprenant un carter composite, **caractérisée en ce que** le carter composite (28) est réalisé suivant un procédé de réalisation de carter composite (28) selon l'une des revendications 1 à 9, et/ou le carter composite (28) est conforme à l'une des revendications 10 à 14.

## Patentansprüche

1. Verfahren für die Herstellung eines Gehäuses aus Verbundmaterial (28) einer Turbomaschine (2), wobei das Gehäuse eine Wandung (34) beinhaltet, die im allgemeinen rund oder kreisbogenförmig ist, und einen Befestigungsflansch (30), der sich radial vom Rand der Wandung aus erstreckt und mit der Wandung eine scharfe Kante (72) bildet, **dadurch gekennzeichnet, dass** das Verfahren, die folgenden Schritte eventuell in dieser Reihenfolge beinhaltet
(a) Lieferung oder Bereitstellung (100) einer Form (56) mit einer Ecke, die so konfiguriert ist, dass sie die Kante (72) des Gehäuses bildet (28);
(b) Lieferung und Einsetzung (106) eines Profils (58) aus thermoplastischem Harz, das entlang der Ecke der Form eingesetzt wird;
(c) Einsetzen (107) einer faserigen Verstärkung (38) in die Form (56), die sich dem Profil (58) anschmiegt, wobei die faserige Verstärkung eventuell mit einem Harz getränkt ist;
(d) Schließen (108) der Form;
(e) Polymerisieren (109) eines in die Form eingespritzten Harzes (70), oder eines Harzes, das die faserige Verstärkung durchtränkt;
(f) Ausformen des Gehäuses (110).

2. Verfahren nach Anspruch 1, **dadurch gekennzeichnet, dass** beim Schließen (d) der Form (56) die faserige Verstärkung (38) an das Profil (58) gepresst wird, wobei das Profil eventuell eine einwärts gebogene Oberfläche (66) besitzt und die Verstärkung eine faserige Vorform ist, die so ausgeformt ist, dass sie sich der einwärts gebogenen Oberfläche (66) des Profils anschmiegt.

3. Verfahren nach einem der Ansprüche 1 bis 2, **dadurch gekennzeichnet, dass** beim Schritt (e) Polymerisation, das eingespritzte Harz (70) oder durchtränkende Harz am Profil (58) anhaftet, wobei das eingespritzte Harz (70) vorzugsweise mit dem Profil (58) in Kontakt kommt.

4. Verfahren nach einem der Ansprüche 1 bis 3, **dadurch gekennzeichnet, dass** das Harz des Profils (58) ein Expoxidharz und/oder Polyamine beinhaltet.

5. Verfahren nach einem der Ansprüche 1 bis 4, **dadurch gekennzeichnet, dass** das Profil zwischen 0,5 und 5 Gewichtsprozente an Fasern enthält, insbesondere Kohlenstofffasern.

6. Verfahren nach einem der Ansprüche 1 bis 5, **dadurch gekennzeichnet, dass** das Harz des Profils (58) zwischen 40 und 90 Gewichtsprozent an N,N,N',N'-Tetraglycidyl-4,4'-Diaminodiphenylmethan enthält.

7. Verfahren nach einem der Ansprüche 1 bis 6, **dadurch gekennzeichnet, dass** das Harz des Profils (58) zwischen 10 und 30 Gewichtsprozent an Sulfonpolyether enthält.

8. Verfahren nach einem der Ansprüche 1 bis 7, **dadurch gekennzeichnet, dass** das Harz des Profils (58) zwischen 1 und 10 Gewichtsprozent 1,5-Naphthalenediol enthält und das Harz des Profils (58) eventuell ein thixotropes Harz ist.

9. Verfahren nach einem der Ansprüche 1 bis 8, **dadurch gekennzeichnet, dass** das Profil (58) ein im Allgemeinen dreieckiges Profil und eine lineare Masse zwischen 5 und 20 kg/m und vorzugsweise zwischen 10 und 15 kg/m besitzt.

10. Verbundgehäuse (28) einer axialen Turbomaschine (2) insbesondere eines Kompressors (4 ; 6), wobei das Gehäuse Folgendes beinhaltet:
- eine allgemein kreisförmige oder kreisbogenförmige Wandung (34);
- einen Befestigungsflansch (30), der sich radial von einem Rand der Wandung (34) aus erstreckt und mit der genannten Wandung eine scharfe Kante (72) bildet;
- eine faserige Verstärkung (28), welche die Wandung und den Flansch verstärkt;
- eine Matrix mit einer Kantenzone (74) zwischen der Kante (72) und der faserigen Verstärkung (28);
**dadurch gekennzeichnet, dass**:
die Kantenzone (74) Fasern beinhaltet, deren mittlere Länge weniger als 10 mm beträgt.

11. Gehäuse (28) nach Anspruch 10, **dadurch gekennzeichnet, dass** die mittlere Länge der Fasern der Kantenzone (74) weniger als 4 mm, vorzugsweise weniger als 2,00 mm beträgt.

12. Gehäuse (28) nach einem der Ansprüche 10 bis 11, **dadurch gekennzeichnet, dass** in der Kantenzone (74) die Matrix Aluminiumpulver enthält, das eventuell zwischen 0,1 und 10 Gewichtsprozent der Kantenzone (74) ausmacht.

13. Gehäuse nach einem der Ansprüche 10 bis 12, **dadurch gekennzeichnet, dass** die faserige Verstärkung (38) ein Rotationsprofil mit einer Rundung (50 ; 54) beinhaltet, welche die Kantenzone (74) begrenzt; eventuell beinhaltet die faserige Verstärkung einen Stapel von faserigen Falten (46), wobei die faserige Verstärkung eine faserige, dreidimensionale gewebte Vorform ist.

14. Gehäuse (28) nach einem der Ansprüche 10 bis 13, **dadurch gekennzeichnet, dass** der Befestigungsflansch (30) ein kreisförmiger oder halbkreisförmiger Flansch oder ein axialer Befestigungsflansch ist.

15. Axiale Turbomaschine (2) mit einem Verbundgehäuse, **dadurch gekennzeichnet, dass** das Verbundgehäuse (28) anhand eines Verfahrens für die Herstellung eines Verbundgehäuses (28) nach einem der Ansprüche 1 bis 9 ausgeführt worden ist, und/oder das Verbundgehäuse einem der Ansprüche 10 bis 14 entspricht.

## Claims

1. Method of manufacturing a composite casing (28) of a turbomachine (2), the casing comprising a wall (34) that is generally circular or shaped as an arc of a circle, a fixing flange (30) extending radially from one edge of the wall and forming with the wall a sharp-edged corner (72), **characterized in that** the method comprises the following steps, possibly in this order:
(a) supplying or procuring (100) a mould (56) with a corner (64) configured to form the edge corner (72) of the casing (28);
(b) supplying a thermoplastic resin profile section (58) and placing (106) same along the corner of the mould;
(c) placing (107) a fibrous reinforcement (38) in the mould (56) hugging the profile section (58), the fibrous reinforcement possibly being impregnated with a resin;
(d) closing (108) the mould;
(e) polymerizing (109) a resin (70) injected into the mould or a resin with which the fibrous reinforcement is impregnated;
(f) demoulding the casing (110).

2. Method according to Claim 1, **characterized in that** during step (d) of closing the mould (56), the fibrous reinforcement (38) is compressed against the profile section (58); the profile section possibly comprises a curved surface (66) and the reinforcement is a fibrous preform configured to hug the curved surface (66) of the profile section.

3. Method according to one of Claims 1 and 2, **characterized in that** during the polymerization step (e), the injected resin (70) or impregnated resin adheres to the profile section (58); for preference the injected resin (70) comes into contact with the profile section (58).

4. Method according to one of Claims 1 to 3, **characterized in that** the resin of the profile section (58) comprises an epoxy-type resin and/or polyamines.

5. Method according to one of Claims 1 to 4, **characterized in that** the profile section (58) comprises between 0.5 wt% and 5 wt% of fibres, notably carbon fibres.

6. Method according to one of Claims 1 to 5, **characterized in that** the resin of the profile section (58) comprises between 40 wt% and 90 wt% of N,N,N',N'-tetraglycidyl-4,4'-diaminodiphenylmethane.

7. Method according to one of Claims 1 to 6, **characterized in that** the resin of the profile section (58) comprises between 10 wt% and 30 wt% of polyether sulfone.

8. Method according to one of Claims 1 to 7, **characterized in that** the resin of the profile section (58) comprises between 1 wt% and 10 wt% of 1,5-Naphthalenediol; possibly the resin of the profile section (58) is a thixotropic resin.

9. Method according to one of Claims 1 to 8, **characterized in that** the profile section (58) has a triangular overall profile and a linear mass of between 5 and 20 kg/m, preferably between 10 and 15 kg/m.

10. Composite casing (28) for an axial turbomachine (2), notably for a compressor (4; 6), the casing comprising:
- a wall (34) that is generally circular or shaped as an arc of a circle;
- a fixing flange (30) extending radially from one edge of the wall (34) and forming with the said wall a sharp-edged corner (72);
- a fibrous reinforcement (28) reinforcing the wall and the flange;
- a matrix with an edge-corner zone (74) between the edge corner (72) and fibrous reinforcement (28);
**characterized in that**
the edge-corner zone (74) comprises fibres the mean length of which is less than 10 mm.

11. Casing (28) according to Claim 10, **characterized in that** the mean length of the fibres in the edge-corner zone (74) is less than 4 mm, preferably less than 2.00 mm.

12. Casing (28) according to one of Claims 10 and 11, **characterized in that** in the edge-corner zone (74), the matrix contains aluminium powder possibly representing between 0.1 % and 10% of the mass of the edge-corner zone (74).

13. Casing (28) according to one of Claims 10 to 12, **characterized in that** the fibrous reinforcement (38) comprises a profile exhibiting symmetry of revolution with a fillet radius (50; 54) which delimits the edge-corner zone (74); the fibrous reinforcement possibly comprises a stack of fibrous plies (46) or the fibrous reinforcement is a fibrous preform produced by three-dimensional weaving.

14. Casing (28) according to one of Claims 10 to 13, **characterized in that** the fixing flange (30) is a circular or semicircular flange or an axial fixing flange.

15. Axial turbomachine (2) comprising a composite casing, **characterized in that** the composite casing (28) is produced according to a method for producing a composite casing (28) according to one of Claims 1 to 9, and/or the composite casing (28) is in accordance with one of Claims 10 to 14.
